# EUROPEAN PATENT APPLICATION

(11) **EP 4 246 784 A1**
(43) Date of publication of application: **20.09.2023**
(21) Application number: 22771563.8
(22) Date of filing: 18.03.2022
(51) Int. Cl.: H02K 15/04

(54) **METHOD OF PRODUCING STATOR FOR ROTATING ELECTRICAL MACHINE**

(30) Priority: 18.03.2021 JP 2021044671
(71) Applicant: AISIN CORPORATION, Kariya-shi, Aichi 448-8650 (JP); TOYOTA JIDOSHA KABUSHIKI KAISHA, Toyota-shi Aichi 471-8571 (JP); DENSO CORPORATION, Kariya-shi, Aichi 448-8661 (JP)
(72) Inventor: ONO, Hiroyuki, Kariya-shi, Aichi 448-8650 (JP); SUGIYAMA, Takeshi, Kariya-shi, Aichi 448-8650 (JP); NISHIMURA, Yuya, Kariya-shi, Aichi 448-8650 (JP); IKEYA, Takenori, Kariya-shi, Aichi 448-8650 (JP)
(74) Representative: Kramer Barske Schmidtchen Patentanwälte PartG mbB
(86) International application number: PCT/JP2022/012870
(87) International publication number: WO 2022/196821

(57) **Abstract**

A method for manufacturing a stator for a rotary electric machine is disclosed. The method includes an installation step of installing coil pieces for a stator coil in a stator core, and a joining step of joining ends of the coil pieces or the end of the coil piece and an end of a busbar by laser welding after the installation step. The joining step includes a setting step of bringing two ends to be joined into contact with each other, an image recognition step of detecting, after the setting step, image features related to non-contact surfaces continuous with contact surfaces of the two ends in an image obtained by imaging the two ends, and a determination step of determining, after the image recognition step, a laser radiation position based on the image features related to the non-contact surfaces subjected to image recognition.

## Description

### TECHNICAL FIELD

The present disclosure relates to a method for manufacturing a stator for a rotary electric machine.

### BACKGROUND ART

There is known a technology including a step of bringing two coil pieces into contact with each other in a radial direction, fixing them with a clamp jig, and capturing an image of the two coil pieces in contact with each other and the clamp jig, a step of performing image recognition for two clamping surfaces of the clamp jig in the captured image, a step of detecting a center line between the two recognized clamping surfaces as contact surfaces of the two coil pieces, and a step of performing laser welding for the two coil pieces at a position corresponding to the detected contact surfaces.

### Related Art Documents

### Patent Documents

Patent Document 1: Japanese Unexamined Patent Application Publication No. 2020-093293 (JP 2020-093293 A)

### SUMMARY OF THE INVENTION

### Problem to be Solved by the Invention

In the related art described above, however, the laser radiation position is determined based on the result of the image recognition for the clamping surfaces discontinuous with the contact surfaces. Therefore, it is difficult to accurately irradiate the contact surfaces between the coil pieces with a laser beam for each set of the two coil pieces to be joined due to individual variations in the thicknesses of the coil pieces (thicknesses in a direction perpendicular to the contact surfaces).

In view of the above, according to one aspect, it is an object to accurately determine the laser radiation position depending on the contact surfaces of the coil pieces.

### Means for Solving the Problem

One aspect provides a method for manufacturing a stator for a rotary electric machine. The method includes:
an installation step of installing coil pieces for a stator coil in a stator core; and
a joining step of joining ends of the coil pieces or the end of the coil piece and an end of a busbar by laser welding after the installation step.

The joining step includes
a setting step of bringing two ends to be joined into contact with each other,
an image recognition step of detecting, after the setting step, image features related to non-contact surfaces continuous with contact surfaces of the two ends in an image obtained by imaging the two ends, and
a determination step of determining, after the image recognition step, a laser radiation position based on the image features related to the non-contact surfaces subjected to image recognition.

### Effects of the Invention

According to the present disclosure, it is possible to accurately determine the laser radiation position depending on the contact surfaces of the coil pieces.

### BRIEF DESCRIPTION OF THE DRAWINGS

[FIG. 1] FIG. 1 is a sectional view schematically showing a sectional structure of a motor according to an embodiment.
[FIG. 2] FIG. 2 is a plan view of a stator core alone.
[FIG. 3] FIG. 3 is a diagram schematically showing a pair of coil pieces installed in the stator core.
[FIG. 4] FIG. 4 is a perspective view of the periphery of a coil end of a stator.
[FIG. 5] FIG. 5 is a perspective view showing an extracted part of in-phase coil pieces.
[FIG. 6] FIG. 6 is a schematic front view of one coil piece.
[FIG. 7] FIG. 7 is a diagram showing joined tip ends of coil pieces and portions near the tip ends.
[FIG. 8] FIG. 8 is a sectional view taken along line A-A in FIG. 7 passing through a welding target portion.
[FIG. 9] FIG. 9 is a diagram showing the relationship between the laser wavelength and the laser absorptivity of samples of various materials.
[FIG. 10] FIG. 10 is a diagram illustrating how the absorptivity changes during welding.
[FIG. 11A] FIG. 11A is an illustration of a keyhole etc. when a green laser is used.
[FIG. 11B] FIG. 11B is an illustration of a keyhole etc. when an infrared laser is used.
[FIG. 12] FIG. 12 is a diagram illustrating a welding method using the green laser according to the embodiment.
[FIG. 13] FIG. 13 is a flowchart schematically showing the flow of a method for manufacturing the stator of the motor.
[FIG. 14] FIG. 14 is a diagram illustrating an image recognition step and a radiation position determination step.
[FIG. 15] FIG. 15 is a diagram illustrating a tip end image.
[FIG. 16] FIG. 16 is a diagram illustrating a method for calculating a movement trajectory of a laser radiation position.
[FIG. 17] FIG. 17 is a schematic flowchart showing the flow of a process implemented by a processing device in the image recognition step and the radiation position determination step.
[FIG. 18] FIG. 18 is a diagram illustrating a problem when there is a significant difference in the thicknesses of the tip ends.
[FIG. 19] FIG. 19 is a top view showing an example of application to another welding target portion.
[FIG. 20] FIG. 20 is a side view showing the example of application to the other welding target portion.
[FIG. 21] FIG. 21 is a diagram illustrating a tip end image according to the example of application to the other welding target portion.
[FIG. 22] FIG. 22 is a diagram showing an example of application to still another welding target portion.
[FIG. 23] FIG. 23 is a perspective view illustrating joint portions between busbars and coil pieces.

### MODES FOR CARRYING OUT THE INVENTION

Embodiments will be described in detail below with reference to the accompanying drawings. The dimensional ratios in the drawings are merely illustrative, and are not limited to these. The shapes etc. in the drawings may be partially exaggerated for convenience of explanation. In this specification, the term "predetermined" is used in the sense of "defined in advance".

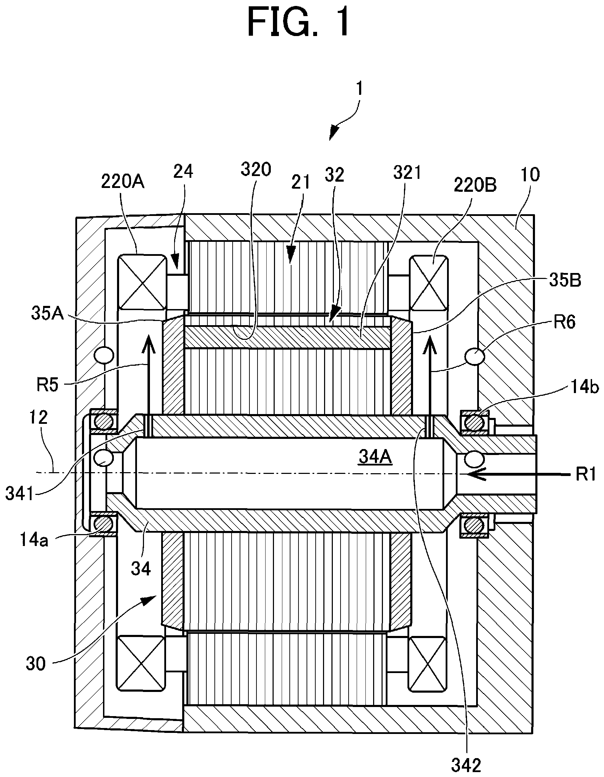

FIG. 1 is a sectional view schematically showing a sectional structure of a motor 1 (an example of a rotary electric machine) according to an embodiment.

FIG. 1 shows a rotation axis 12 of the motor 1. In the following description, the axial direction refers to a direction in which the rotation axis (rotation center) 12 of the motor 1 extends, and the radial direction refers to a radial direction about the rotation axis 12. Therefore, the radially outer side refers to a side away from the rotation axis 12, and the radially inner side refers to a side toward the rotation axis 12. The circumferential direction corresponds to a rotation direction around the rotation axis 12.

The motor 1 may be a vehicle drive motor that is used in, for example, a hybrid vehicle or an electric vehicle. However, the motor 1 may be used for any other purposes.

The motor 1 is of an inner rotor type, and a stator 21 is provided so as to surround the radially outer side of a rotor 30. The radially outer side of the stator 21 is fixed to a motor housing 10.

The rotor 30 is disposed radially inward of the stator 21. The rotor 30 includes a rotor core 32 and a rotor shaft 34. The rotor core 32 is fixed to the radially outer side of the rotor shaft 34 and rotates together with the rotor shaft 34. The rotor shaft 34 is rotatably supported by the motor housing 10 via bearings 14a, 14b. The rotor shaft 34 defines the rotation axis 12 of the motor 1.

The rotor core 32 is made of, for example, magnetic steel laminations having an annular shape. Permanent magnets 321 are inserted inside the rotor core 32. The number, arrangement, etc. of permanent magnets 321 may be determined as appropriate. In a modification, the rotor core 32 may be made of a green compact obtained by pressing and compacting magnetic powder.

End plates 35A, 35B are attached to both sides of the rotor core 32 in the axial direction. The end plates 35A, 35B may have a function to adjust an imbalance of the rotor 30 (function to eliminate the imbalance by cutting etc.) in addition to a support function to support the rotor core 32.

As shown in FIG. 1, the rotor shaft 34 has a hollow portion 34A. The hollow portion 34A extends along the entire axial length of the rotor shaft 34. The hollow portion 34A may function as an oil passage. For example, oil is supplied to the hollow portion 34A from its one axial end as shown by arrow R1 in FIG. 1, and the oil flows along the radially inner surface of the rotor shaft 34, so that the rotor core 32 can be cooled from the radially inner side. The oil flowing along the radially inner surface of the rotor shaft 34 may be injected radially outward through oil holes 341, 342 formed in both ends of the rotor shaft 34 (arrows R5, R6) to cool coil ends 220A, 220B.

Although FIG. 1 shows the motor 1 having a specific structure, the motor 1 may have any structure as long as it has a stator coil 24 (described later) that is joined by welding. Accordingly, for example, the rotor shaft 34 need not have the hollow portion 34A, or may have a hollow portion with an inner diameter significantly smaller than that of the hollow portion 34A. While a specific cooling method is disclosed in FIG. 1, the motor 1 may be cooled by any method. Therefore, for example, an oil introduction pipe inserted into the hollow portion 34A may be provided, or oil may be dropped from the radially outer side toward the coil ends 220A, 220B through an oil passage in the motor housing 10.

Although FIG. 1 shows the inner rotor motor 1 in which the rotor 30 is disposed inside the stator 21, the present disclosure may be applied to other types of motor. For example, the present disclosure may be applied to an outer rotor motor in which the rotor 30 is concentrically disposed outside the stator 21, or a dual rotor motor in which the rotor 30 is disposed both outside and inside the stator 21.

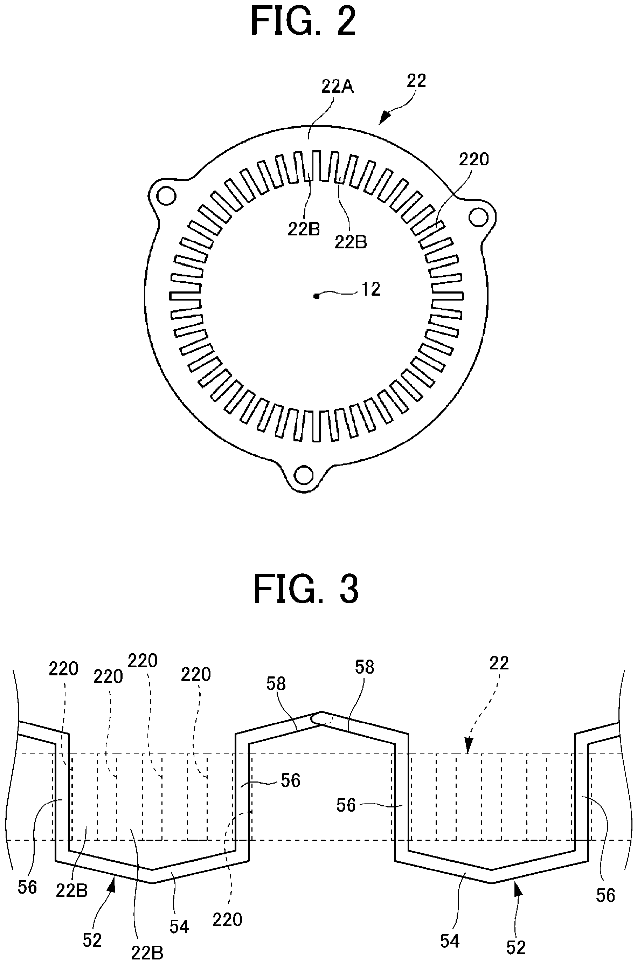

Next, the configuration related to the stator 21 will be described in detail with reference to FIG. 2 and the subsequent figures.

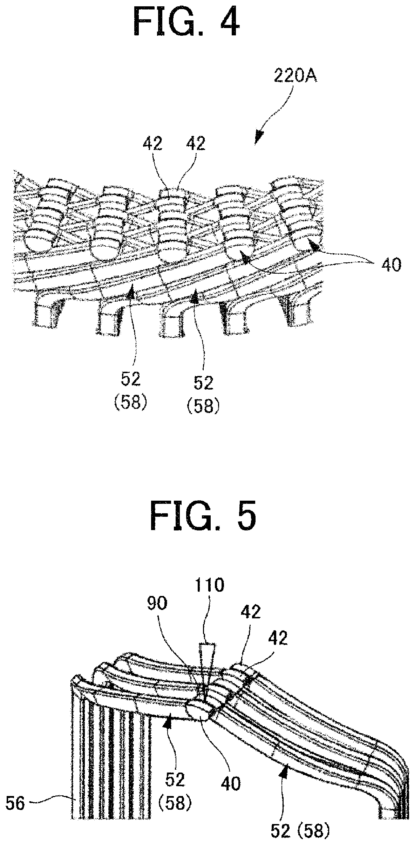

FIG. 2 is a plan view of a stator core 22 alone. FIG. 3 is a diagram schematically showing a pair of coil pieces 52 installed in the stator core 22. FIG. 3 shows the relationship between the pair of coil pieces 52 and slots 220 on the radially inner side of the stator core 22 shown opened out flat. In FIG. 3, the stator core 22 is shown by dashed lines, and a part of the slots 220 is not shown. FIG. 4 is a perspective view of the periphery of the coil end 220A of the stator 21. FIG. 5 is a perspective view showing an extracted part of in-phase coil pieces 52.

The stator 21 includes the stator core 22 and the stator coil 24.

For example, the stator core 22 is made of, for example, magnetic steel laminations having an annular shape. In a modification, however, the stator core 22 may be made of a green compact obtained by pressing and compacting magnetic powder. The stator core 22 may be composed of divided cores divided in the circumferential direction, or may be in a form in which the stator core 22 is not divided in the circumferential direction. The plurality of slots 220 in which the stator coil 24 is wound is formed on the radially inner side of the stator core 22. Specifically, as shown in FIG. 2, the stator core 22 includes an annular back yoke 22A and a plurality of teeth 22B extending radially inward from the back yoke 22A, and the slots 220 are formed between the plurality of teeth 22B in the circumferential direction. Any number of slots 220 may be formed. In the present embodiment, 48 slots 220 are formed as an example.

The stator coil 24 includes a U-phase coil, a V-phase coil, and a W-phase coil (hereinafter referred to as "phase coils" when the phases U, V, and W are not distinguished from each other). The proximal end of each phase coil is connected to an input terminal (not shown). The distal end of each phase coil is connected to the distal ends of the other phase coils to form a neutral point of the motor 1. That is, the stator coil 24 is connected in a star connection. However, the manner of connection of the stator coil 24 may be changed as appropriate depending on the required motor characteristics etc. For example, the stator coil 24 may be connected in a delta connection instead of the star connection.

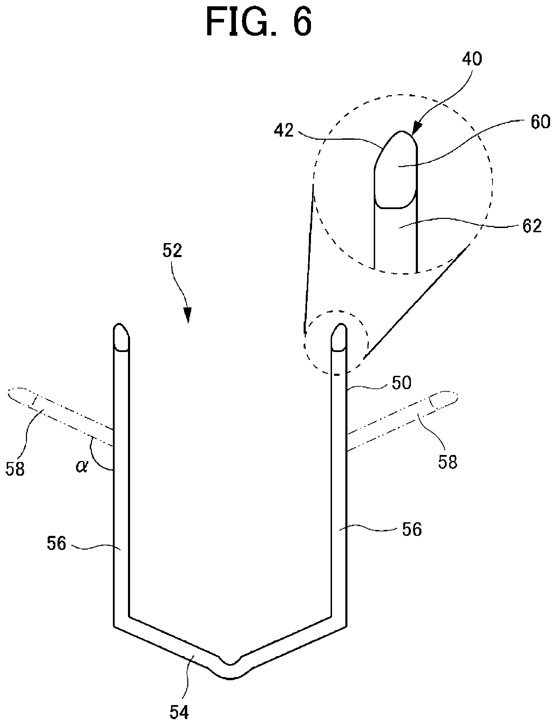

Each phase coil is formed by joining a plurality of coil pieces 52. FIG. 6 is a schematic front view of one coil piece 52. The coil pieces 52 are in the form of segment coils that are separate, easy-to-install units of phase coils (e.g., units each to be inserted into two slots 220). The coil piece 52 is formed by coating a linear conductor (rectangular wire) 60 having a substantially rectangular cross section with an insulating coating 62. In the present embodiment, the linear conductor 60 is made of, for example, copper. In a modification, the linear conductor 60 may be made of a different conductor material such as iron.

Before being installed in the stator core 22, the coil piece 52 may be formed into a substantially U-shape having a pair of straight portions 50 and a connecting portion 54 connecting the pair of straight portions 50. When installing the coil piece 52 in the stator core 22, the pair of straight portions 50 is inserted into the slots 220 (see FIG. 3). As shown in FIG. 3, the connecting portion 54 thus extends in the circumferential direction across a plurality of teeth 22B (and therefore a plurality of slots 220) at the other axial end of the stator core 22. Although the connecting portion 54 may extend across any number of slots 220, the connecting portion 54 extends across three slots 220 in FIG. 3. After being inserted into the slots 220, the straight portions 50 are bent at an intermediate position in the circumferential direction, as shown by long dashed double-short dashed lines in FIG. 6. Each straight portion 50 is thus turned into a leg portion 56 extending in the axial direction in the slot 220 and a crossover portion 58 extending in the circumferential direction at one axial end of the stator core 22.

In FIG. 6, the pair of straight portions 50 is bent away from each other. However, the present disclosure is not limited to this. For example, the pair of straight portions 50 may be bent toward each other. The stator coil 24 may also have a neutral point coil piece etc. for connecting the distal ends of the three-phase coils to form a neutral point.

A plurality of leg portions 56 of the coil pieces 52 shown in FIG. 6 is inserted into one slot 220 side by side in the radial direction. A plurality of crossover portions 58 extending in the circumferential direction is thus arranged side by side in the radial direction at the one axial end of the stator core 22. As shown in FIGS. 3 and 5, the crossover portion 58 of one coil piece 52 protruding from one slot 220 and extending toward a first side in the circumferential direction (e.g., clockwise direction) is joined to the crossover portion 58 of another coil piece 52 protruding from another slot 220 and extending toward a second side in the circumferential direction (e.g., counterclockwise direction).

In the present embodiment, for example, six coil pieces 52 are installed in one slot 220. Hereinafter, these coil pieces 52 are also referred to as "first turn", "second turn", "third turn", ... from outside to inside in the radial direction, with the outermost coil piece 52 in the radial direction being the first turn. In this case, the first turn coil piece 52 and the second turn coil piece 52 are joined at their tip ends 40 by a joining step including a radiation step described later, the third turn coil piece 52 and the fourth turn coil piece 52 are joined at their tip ends 40 by the joining step including the radiation step described later, and the fifth turn coil piece 52 and the sixth turn coil piece 52 are joined at their tip ends 40 by the joining step including the radiation step described later.

Each coil piece 52 is covered with the insulating coating 62 as described above, but the insulating coating 62 is removed only from the tip ends 40. This is to ensure electrical connection with other coil pieces 52 at the tip ends 40. As shown in FIGS. 5 and 6, an axial outer end face 42 of the tip end 40 of the coil piece 52, that is, one end face in a width direction of the coil piece 52 (axial outer end face 42) is an arcuate surface that is convex outward in the axial direction.

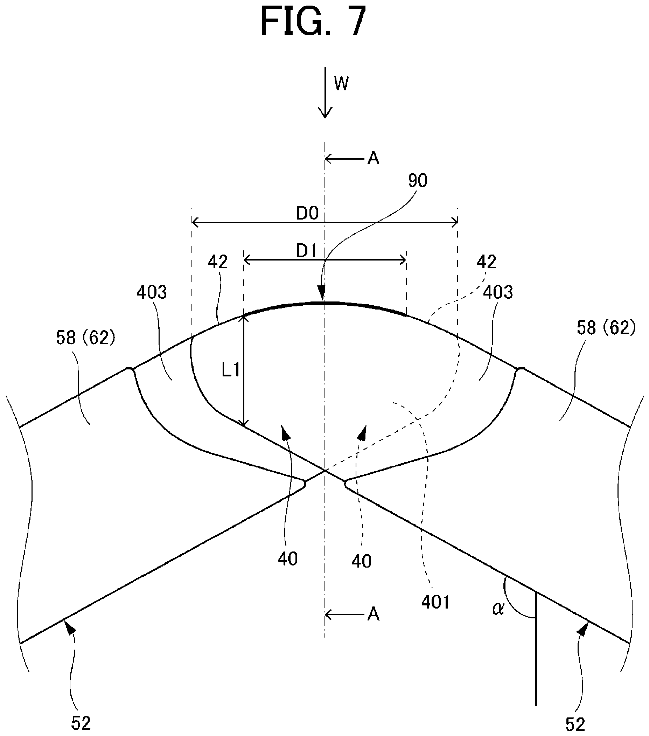

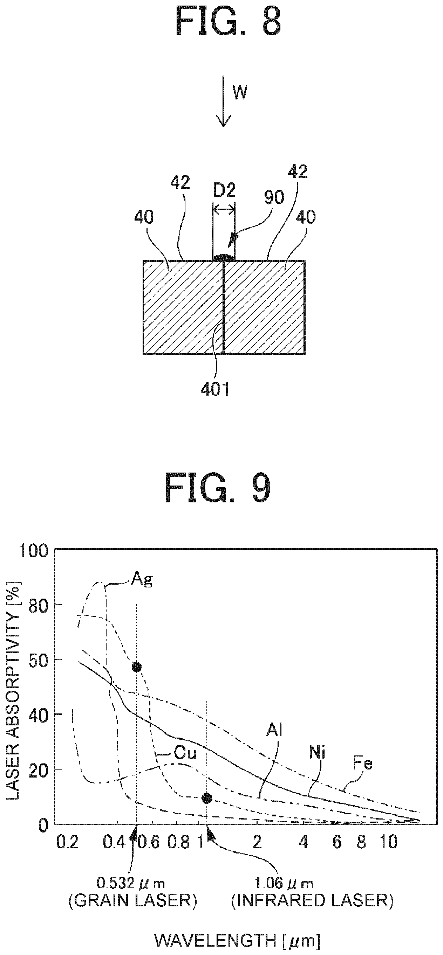

FIG. 7 is a diagram showing the joined tip ends 40 of the coil pieces 52 and the portions near the tip ends 40. FIG. 7 schematically shows a circumferential range D1 of a welding target portion 90. FIG. 8 is a sectional view taken along line A-A in FIG. 7 passing through the welding target portion 90.

When joining the tip ends 40 of the coil pieces 52, the tip end 40 of one coil piece 52 and the tip end 40 of another coil piece 52 abut against each other to have a C-shape in the view shown in FIG. 7 (as viewed in the direction perpendicular to contact surfaces 401). At this time, the two tip ends 40 to be joined together may be laid in the thickness direction and joined together so that the central axes of the arcuate surfaces (axial outer end faces 42) agree with each other. By laying the two tip ends 40 with the central axes agreeing with each other, the axially outer lines of the two tip ends 40 to be joined agree with each other and the two tip ends 40 can be laid appropriately even when a bending angle α is relatively large or small.

In this case, the welding target portion 90 extends linearly along the contact surfaces 401 as shown by the range D1 and a range D2. That is, the welding target portion 90 extends linearly along the range D1 with a width of the range D2 as viewed from a radiation side of a laser beam 110 (see FIG. 5) (see arrow W in FIGS. 7 and 8). The contact surfaces 401 refer to surfaces of one coil piece 52 and another coil piece 52 that face each other in the radial direction and come into contact with each other in the radial direction.

In the present embodiment, the joining method for joining the tip ends 40 of the coil pieces 52 is welding. In the present embodiment, the welding method is laser welding using a laser beam source as a heat source instead of arc welding represented by TIG welding. The axial length of the coil ends 220A, 220B can be reduced by using the laser welding instead of the TIG welding. That is, in the case of the TIG welding, the tip ends of the coil pieces to be brought into contact with each other need to be bent axially outward so as to extend in the axial direction. In the case of the laser welding, however, such bending is not necessary, and as shown in FIG. 7, welding can be implemented with the tip ends 40 of the coil pieces 52 to be brought into contact with each other extending in the circumferential direction. The axial length of the coil ends 220A, 220B can thus be reduced compared to the case where the tip ends 40 of the coil pieces 52 to be brought into contact with each other are bent axially outward so as to extend in the axial direction.

In the laser welding, as schematically shown in FIG. 5, the welding laser beam 110 is directed to the welding target portion 90 in the two tip ends 40 that are in contact with each other. The radiation direction (propagation direction) of the laser beam 110 is substantially parallel to the axial direction, and is a direction from outside in the axial direction toward the axial outer end faces 42 of the two tip ends 40 that are in contact with each other. In the case of the laser welding, heating can be locally performed. Therefore, only the tip ends 40 and the portions near the tip ends 40 can be heated, and damage (carbonization) etc. to the insulating coating 62 can be effectively reduced. As a result, the plurality of coil pieces 52 can be electrically connected while maintaining appropriate insulation performance.

As shown in FIG. 7, the circumferential range D1 of the welding target portion 90 is a portion excluding both ends of a total circumferential range D0 of the axial outer end faces 42 at the contact portion between the tip ends 40 of the two coil pieces 52. This is because it is difficult to ensure a sufficient welding depth (see dimension L1 in FIG. 7) at both ends due to the convex arc surfaces of the axial outer end faces 42. The circumferential range D1 of the welding target portion 90 may be adapted so as to ensure a required joining area between the coil pieces 52, required welding strength, etc.

As shown in FIG. 8, the radial range D2 of the welding target portion 90 is centered at the contact surfaces 401 of the tip ends 40 of the two coil pieces 52. The radial range D2 of the welding target portion 90 may correspond to the diameter of the laser beam 110 (beam diameter). That is, the laser beam 110 is radiated in such a manner that the radiation position changes linearly in the circumferential direction without substantially changing in the radial direction. In other words, the laser beam 110 is moved so that the radiation position changes in a linear pattern parallel to the contact surfaces 401. The laser beam 110 can thus be more efficiently radiated to the linear welding target portion 90 compared to the case where the radiation position is changed in, for example, a loop (spiral) or zigzag (meandering) pattern.

FIG. 9 is a diagram showing the relationship between the laser wavelength and the laser absorptivity (hereinafter sometimes simply referred to as "absorptivity") of samples of various materials. FIG. 9 shows characteristics of the samples of various materials, namely copper (Cu), aluminum (Al), silver (Ag), nickel (Ni), and iron (Fe), where the abscissa represents a wavelength λ, and the ordinate represents an absorptivity.

Copper that is a material of the linear conductor 60 of the coil piece 52 has an absorptivity as low as about 10% for an infrared laser (laser with a wavelength of 1064 nm) that is commonly used in the laser welding, as shown by a black circle at the intersection with a dotted line of λ2 = 1.06 µm in FIG. 9. That is, in the case of the infrared laser, most of the laser beam 110 is reflected and not absorbed by the coil piece 52. Therefore, a relatively large amount of heat input is required in order to obtain a required joining area between the coil pieces 52 to be joined, and welding may become unstable due to the high heat effect.

In view of this, in the present embodiment, a green laser is used instead of the infrared laser. The "green laser" is a concept including not only a laser with a wavelength of 532 nm, that is, an SHG (Second Harmonic Generation: second harmonic) laser but also lasers with wavelengths close to 532 nm. In a modification, a laser with a wavelength of 0.6 µm or less that does not belong to the category of the green laser may be used. The wavelength of the green laser can be obtained by, for example, converting a fundamental wavelength generated by a YAG laser or a YVO4 laser through an oxide single crystal (e.g., LBO: lithium triborate).

Copper that is a material of the linear conductor 60 of the coil piece 52 has an absorptivity as high as about 50% for the green laser, as shown by a black circle at the intersection with a dotted line of λ1 = 0.532 µm in FIG. 9. Therefore, according to the present embodiment, a required joining area between the coil pieces 52 can be ensured with a smaller amount of heat input than in the case of using the infrared laser.

The characteristic that the absorptivity is higher for the green laser than for the infrared laser is remarkable in copper as shown in FIG. 9, but can be observed not only in copper but also in many of other metal materials. Therefore, welding with the green laser may be implemented even when a material other than copper is used for the linear conductor 60 of the coil piece 52.

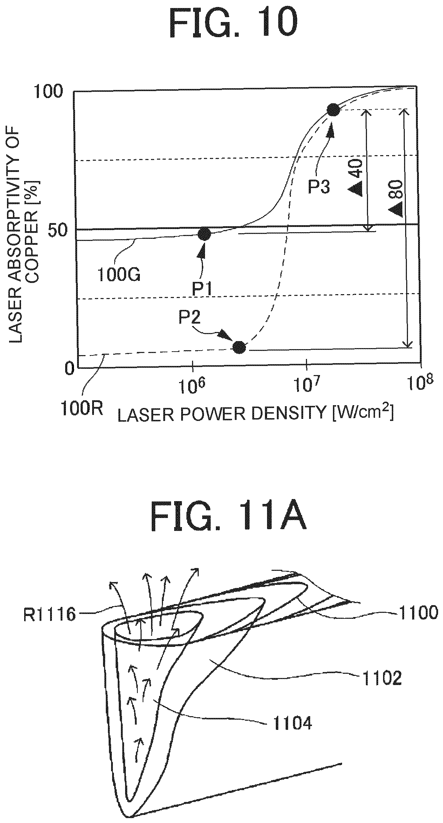

FIG. 10 is a diagram illustrating how the absorptivity changes during welding. FIG. 10 shows a characteristic 100G for the green laser and a characteristic 100R for the infrared laser, where the abscissa represents the laser power density, and the ordinate represents the laser absorptivity of copper.

FIG. 10 shows points P1, P2 where copper starts to melt and a point P3 where a keyhole is formed in the case of the green laser and the infrared laser. As shown by the points P1, P2 in FIG. 10, it can be seen that copper can start to melt with a lower laser power density for the green laser than for the infrared laser. It can also be seen that, due to the difference in absorptivity described above, the difference between the absorptivity at the point P3 where a keyhole is formed and the absorptivity at the start of radiation (that is, the absorptivity when the laser power density is 0) is smaller for the green laser than for the infrared laser. Specifically, a change in absorptivity during welding is about 80% for the infrared laser, while a change in absorptivity during welding is about 40% for the green laser, which is about half the change for the infrared laser.

As described above, in the case of the infrared laser, the change (increase) in absorptivity during welding is as relatively large as about 80%. Therefore, the keyhole is more likely to become unstable, and variations in welding depth and welding width and disturbance of a molten pool (e.g., spatter) are more likely to occur. In the case of the green laser, the change (increase) in absorptivity during welding is as relatively small as about 40%. Therefore, the keyhole is less likely to become unstable, and variations in welding depth and welding width and disturbance of a molten pool (e.g., spatter) are less likely to occur. Spatter is metal particles etc. expelled by irradiation with a laser etc.

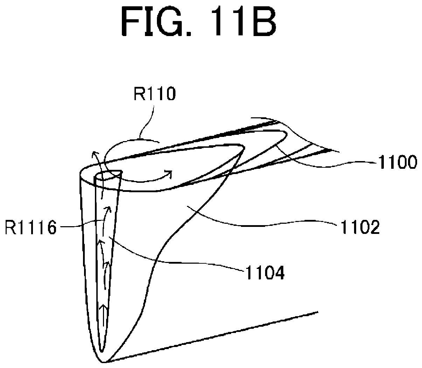

In the case of the infrared laser, the absorptivity is low as described above. It is therefore common to compensate for the low absorptivity by making the beam diameter relatively small (e.g., ϕ0.075 mm). This also contributes to the keyhole becoming unstable. FIG. 11B is an illustration of a keyhole etc. when the infrared laser is used, where 1100 indicates a weld bead, 1102 indicates a molten pool, and 1104 indicates a keyhole. Arrow R1116 schematically shows how gas is released. Arrow R110 schematically shows how the radiation position of the infrared laser is moved due to the small beam diameter. In the case of the infrared laser, the absorptivity is low and it is difficult to make the beam diameter relatively large as described above. Therefore, a relatively long movement trajectory of the radiation position including meandering (relatively long continuous radiation time) tends to be necessary in order to obtain a required melting width.

In the case of the green laser, the absorptivity is relatively high as described above, and it is possible to make the beam diameter relatively large (e.g., ϕ0.1 mm or more). A large, stable keyhole can thus be formed. As a result, gas release is improved, and spatter etc. can be effectively reduced. FIG. 11A is an illustration of a keyhole etc. when the green laser is used. The definitions of the signs are as described above with reference to FIG. 11B. In the case of the green laser, it can be easily visually understood from FIG. 11A how a keyhole is stabilized and gas release is improved due to the increased beam diameter. In the case of the green laser, unlike the infrared laser, the absorptivity is relatively high and it is possible to make the beam diameter relatively large as described above. Therefore, the movement trajectory of the radiation position (radiation time) necessary to obtain a required melting width (see the radial range D2 of the welding target portion 90 shown in FIG. 8) can be made relatively short (small).

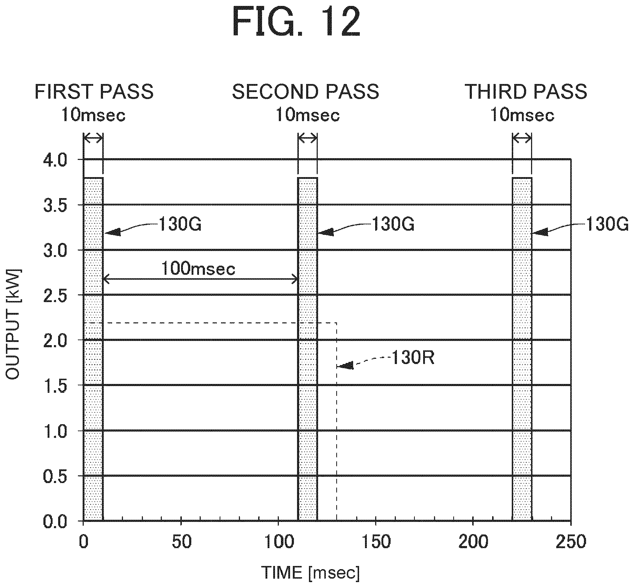

FIG. 12 is a diagram illustrating a welding method using the green laser according to the present embodiment. FIG. 12 schematically shows time-series waveforms of laser output during welding, where the abscissa represents time, and the ordinate represents laser output.

In the present embodiment, as shown in FIG. 12, welding is implemented by pulsed radiation of the green laser at a laser output of 3.8 kW. In FIG. 12, a pulse oscillation of a laser oscillator is implemented so that the laser output is 3.8 kW only for 10 msec, and after an interval of 100 msec, a pulse oscillation of the laser oscillator is again implemented so that the laser output is 3.8 kW only for 10 msec. Hereinafter, one pulse radiation (pulse radiation for 10 msec) that can be performed by one pulse oscillation as described above is also referred to as "one pass". In FIG. 12, radiations of the first pass to the third pass are indicated by pulse waveforms 130G. For comparison, FIG. 12 also shows a pulse waveform 130R of pulsed radiation of the infrared laser.

In the case of the green laser, the output of the laser oscillator is low (e.g., up to 400 W for continuous radiation), and it is difficult to obtain a high output necessary to ensure deep penetration (e.g., a laser output as high as 3.0 kW or more). That is, since the green laser is generated through a wavelength conversion crystal such as an oxide single crystal as described above, the output decreases when passing through the wavelength conversion crystal. For this reason, it is not possible to obtain a high output necessary to ensure deep penetration when an attempt is made to continuously radiate the laser beam of the green laser.

In this regard, in the present embodiment, a high output necessary to ensure deep penetration (e.g., a laser output as high as 3.0 kW or more) is obtained by pulsed radiation of the green laser as described above. This is because, even when an output of, for example, only up to 400 W can be obtained by continuous radiation, an output as high as, for example, 3.0 kW or more can be achieved by pulsed radiation. Pulsed radiation is thus implemented by accumulating continuous energy for increasing peak power and performing pulse oscillation. In the case where the circumferential range D1 of one welding target portion is relatively wide, the one welding target portion may be subjected to a plurality of pulse oscillations. That is, the one welding target portion may be irradiated with two or more passes at a relatively high laser output (e.g., laser output of 3.0 kW or more). This makes it easy to ensure deep penetration in the entire welding target portion 90 and makes it possible to achieve high-quality welding even when the circumferential range D1 of the welding target portion 90 described above is relatively wide.

Although the interval is a specific value of 100 msec in FIG. 12, the interval can be set as desired, and may be minimized within a range in which a required high output is ensured. Although the laser output is a specific value of 3.8 kW in FIG. 12, the laser output may be changed as appropriate within a range in which a required welding depth is ensured, as long as the laser output is 3.0 kW or more.

FIG. 12 also shows the pulse waveform 130R when the infrared laser is continuously radiated at a laser output of 2.3 kW for a relatively long time of 130 msec. Unlike the green laser, the infrared laser can be continuously radiated at a relatively high laser output (2.3 kW). As described above, however, in the case of the infrared laser, a relatively long movement trajectory of the radiation position including meandering (relatively long continuous radiation time) is necessary in order to obtain a required melting width. In this case, the amount of heat input is about 312 J, which is significantly larger than about 80 J (in the case of two passes) that is the amount of heat input in the case of the green laser shown in FIG. 12.

As described above, according to the present embodiment, the use of the green laser enables welding with a laser beam for which the material of the linear conductor 60 of the coil piece 52 (in this example, copper) has higher absorptivity compared to the infrared laser. Accordingly, the movement trajectory of the radiation position (time) necessary to obtain a required melting width (see the radial range D2 of the welding target portion 90 shown in FIG. 8) can be made relatively short (small). That is, due to an increased keyhole per pulse oscillation with a relatively large beam diameter, the number of pulse oscillations necessary to obtain a required melting width can be made relatively small. As a result, a necessary joining area between the coil pieces 52 can be ensured with a relatively small amount of heat input.

According to the present embodiment, one welding target portion can be irradiated with two or more passes of the green laser. In this case, it is easy to ensure deep penetration in the entire welding target portion 90 and it is possible to achieve high-quality welding even when the circumferential range D1 of the welding target portion 90 is relatively wide.

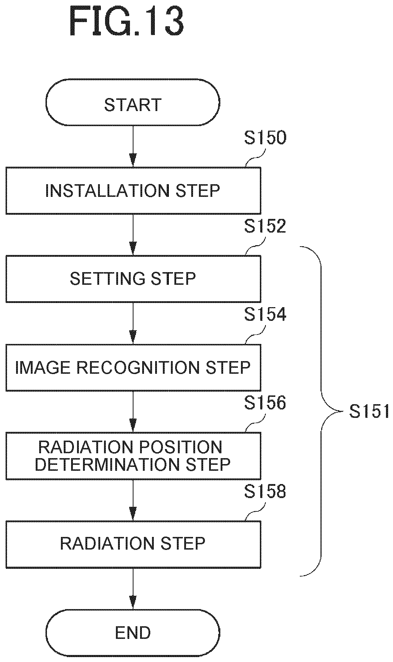

Next, a preferred example of a laser radiation position determination method based on image recognition will be described with reference to FIG. 13 and the subsequent figures while describing a method for manufacturing the stator 21 of the motor 1.

FIG. 13 is a flowchart schematically showing the flow of the method for manufacturing the stator 21 of the motor 1.

First, this manufacturing method includes an installation step of installing the coil pieces 52 described above with reference to FIG. 6 in the stator core 22 (step S150).

Next, this manufacturing method includes a joining step (step S151) after the installation step. The joining step includes a setting step of setting the tip ends 40 of the coil pieces 52 so that the tip ends 40 of each pair of coil pieces 52 come into contact with each other in the radial direction (step S152).

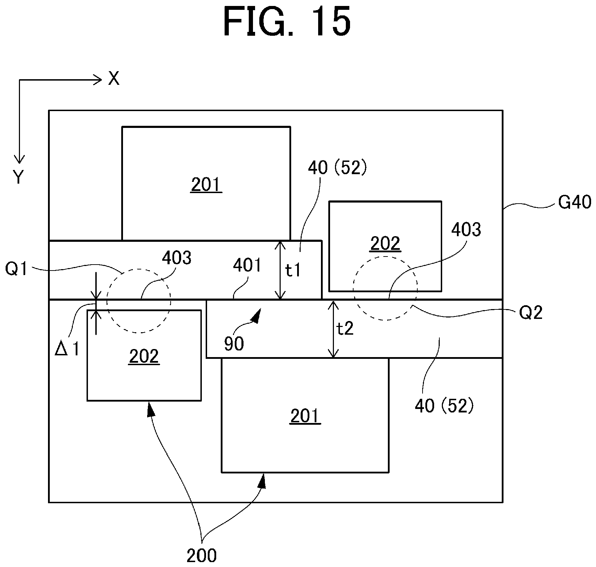

When the setting step is completed, the tip ends 40 of each pair of coil pieces 52 come into contact with each other in the radial direction as shown in FIG. 7. In the setting step, a jig 200 (see FIG. 15) may be used to achieve and maintain such a contact state.

Next, the joining step (step S151) of this manufacturing method includes an image recognition step (step S154) of detecting image features related to non-contact surfaces 403 (see FIGS. 7 and 15) continuous with the contact surfaces 401 of the two tip ends 40 in an image obtained by imaging the two tip ends 40 (hereinafter referred to as "tip end image G40"). Since the contact surface 401 is the surface of the linear conductor 60, the non-contact surface 403 continuous with the contact surface 401 is also the surface of the linear conductor 60. The non-contact surface 403 basically extends flush with the contact surface 401.

The image feature related to the non-contact surface 403 may be a feature related to a brightness difference appearing on the tip end image G40 in a direction perpendicular to the non-contact surface 403. In the present embodiment, the image feature related to the non-contact surface 403 is an edge detectable due to the brightness difference appearing on the tip end image G40 in the direction perpendicular to the non-contact surface 403. The edge may be detected (extracted) by any method such as a Sobel filter. Further details of the image recognition step will be described later.

Next, the joining step (step S151) of this manufacturing method includes a radiation position determination step (step S156) of determining the laser radiation position of the laser beam 110 based on the edges related to the non-contact surfaces 403 subjected to the image recognition. In the radiation position determination step, a movement trajectory (time-series change trajectory) of the laser radiation position of the laser beam 110 with respect to the current welding target portion 90 may be determined. For example, when the welding target portion 90 is covered by two or more passes of radiation, the movement trajectory of the laser radiation position for each pass may be determined. Further details of the radiation position determination step will be described later.

Next, the joining step (step S151) of this manufacturing method includes a radiation step (step S158) of radiating the laser beam 110 to the welding target portion 90 as described above. The setting step and the radiation step may be performed in batches of one or more predetermined number of welding target portions 90 at a time, or may be performed on all the welding target portions 90 of one stator 21 at a time. This manufacturing method may be ended when the stator 21 is completed by performing various necessary steps as appropriate after the radiation step.

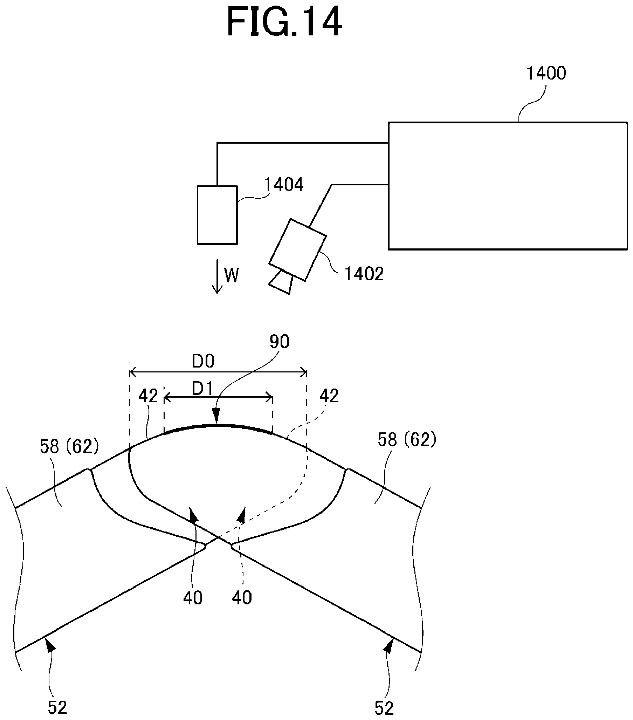

Next, further details of the image recognition step (step S154) and the radiation position determination step (step S156) shown in FIG. 13 will be described with reference to FIGS. 14 to 17.

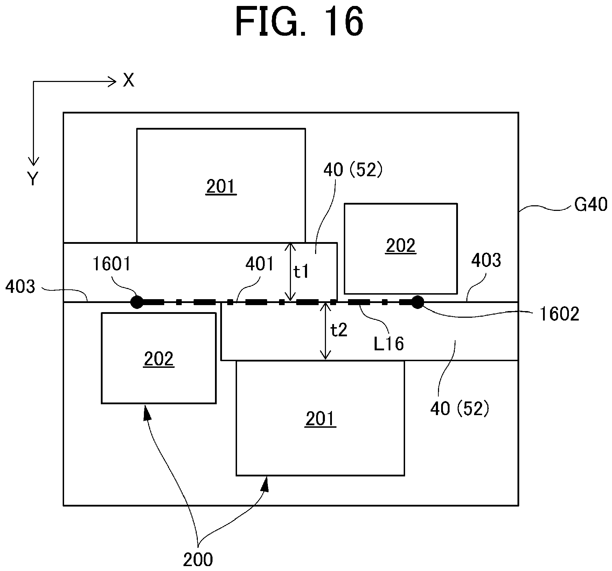

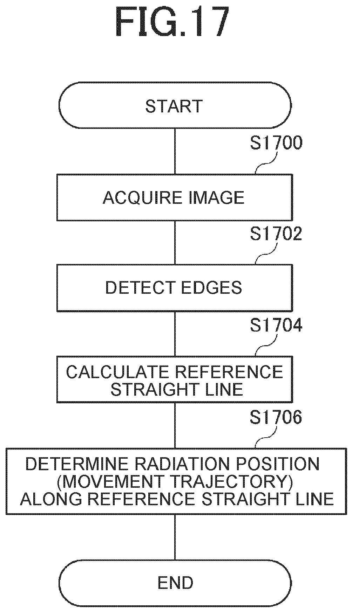

FIG. 14 is a diagram illustrating the image recognition step and the radiation position determination step, and is a diagram schematically showing components used in the image recognition step and the radiation position determination step together with a side view of the two coil pieces 52 to be joined. FIG. 15 is a diagram illustrating the tip end image G40, and is a diagram schematically showing an example of the tip end image G40. In FIG. 15, edge detection areas are indicated by dotted-line enclosures Q1, Q2 for description. FIG. 16 is a diagram illustrating a method for calculating the movement trajectory of the laser radiation position, and is a diagram schematically showing, by a long dashed short dashed line, a reference straight line L16 along the movement trajectory of the laser radiation position in the tip end image G40 shown in FIG. 15. FIG. 17 is a schematic flowchart showing the flow of a process implemented by a processing device 1400 in the image recognition step and the radiation position determination step.

In the present embodiment, the components that implement the image recognition step and the radiation position determination step include the processing device 1400, a camera 1402, and a laser radiation device 1404.

The processing device 1400 is a computer such as a microcomputer. The functions of the processing device 1400 described below may be implemented by a plurality of computers, or may be implemented in cooperation with an external server computer.

The camera 1402 generates the tip end image G40. As schematically shown in FIG. 14, the camera 1402 captures an image of a portion including the contact surfaces 401 and the non-contact surfaces 403 (see FIG. 15) of the two tip ends 40 as viewed from the radiation side of the laser beam 110 (see arrow W in FIG. 14). In this case, the camera 1402 is preferably positioned such that the optical axis extends along the contact surfaces 401 and the non-contact surfaces 403 of the two tip ends 40. In this case, the optical axis of the camera 1402 is substantially parallel to the contact surface 401. The term "substantially parallel" is a concept that allows a deviation of about 10°. In this case, the camera 1402 may be positioned such that the optical axis is substantially included in, for example, the contact surface 401. The camera 1402 may be fixed at the position where the camera 1402 is positioned, or may acquire the tip end images G40 related to a plurality of sets of the tip ends 40 while changing the position where the camera 1402 is positioned.

The camera 1402 may include an illumination light source (not shown) in order to ensure necessary brightness in the tip end image G40. In this case, the light source may be disposed so as to illuminate the area related to the tip end image G40. The light source need not be integrated with the camera 1402.

The laser radiation device 1404 is a device that radiates the laser beam 110 described above. The laser beam 110 can change its laser radiation position, for example, by optical scanning.

In the present embodiment, the processing device 1400 may implement the image recognition step and the radiation position determination step described above by performing various processes shown in FIG. 17 based on the tip end image G40 from the camera 1402.

The various processes shown in FIG. 17 may be performed for each welding target portion 90. The tip end image G40 may be acquired for a plurality of welding target portions 90 in common.

Specifically, the processing device 1400 first acquires, from the camera 1402, the tip end image G40 obtained by imaging one welding target portion 90 to be processed currently (step S1700).

Next, the processing device 1400 performs an edge detection process on the tip end image G40 acquired in step S1700 (step S1702). The edge detection process may be performed on the entire tip end image G40, or may be performed only on a predetermined area. In the example shown in FIG. 15, edges are detected in a Y direction (a direction perpendicular to the contact surfaces 401) in the edge detection process.

Since the insulating coating 62 is removed from the tip end 40 of each coil piece 52 as described above, light is likely to be reflected. Therefore, the pixel area related to the tip end 40 in the tip end image G40 has pixel values with relatively high brightness.

An image of a portion other than the tip end 40 of the coil piece 52 and an image of an object other than the coil piece 52 have relatively low pixel values in the tip end image G40. By using such features, the edge related to the non-contact surface 403 can be detected accurately.

Specifically, in the tip end image G40, a relatively sharp brightness change occurs between the pixel values of the image of the tip end 40 and the pixel values of a pixel area adjacent to the tip end 40 in the Y direction. Therefore, the edges related to the non-contact surfaces 403 can be detected accurately, for example, by detecting edges caused by the relatively sharp brightness change in the enclosures Q1, Q2 in FIG. 15. Since the non-contact surface 403 extends in the X direction like the contact surface 401, pixel positions where the relatively sharp brightness change occurs tend to be continuous linearly in the X direction. Therefore, such a tendency may be used for the edge detection related to the non-contact surface 403.

It is difficult to accurately detect the edge related to the contact surface 401 unlike the edge related to the non-contact surface 403. This is because the images of the two tip ends 40 in contact with each other in the tip end image G40 are continuous in the Y direction in a section related to the contact surface 401 in the X direction and therefore the relatively sharp brightness change does not occur at the position of the contact surface 401 in the Y direction.

In the present embodiment, as schematically shown in FIG. 15, the non-contact surface 403 of the coil piece 52 faces the jig 200 used in the setting step in the radial direction (the Y direction in the tip end image G40) with a clearance Δ1. In this case, the area of the clearance Δ1 is less likely to be exposed to light and becomes darker. Thus, the edge of the non-contact surface 403 in the tip end image G40 becomes even clearer and can be detected with high accuracy. In other words, the edge related to the non-contact surface 403 can be detected accurately by detecting the edge of the portion of the non-contact surface 403 that faces the jig 200 in the radial direction with the clearance Δ1 (see the enclosures Q1, Q2 in FIG. 15).

In the present embodiment, the jig 200 functions to position and maintain the two tip ends 40 in the contact state described above in the setting step, and includes a first jig 201 and a second jig 202. The first jig 201 is relatively movable in the radial direction while sandwiching the two tip ends 40 in the radial direction, and may function to bring the two tip ends 40 into contact with each other in the radial direction and maintain the contact state in the setting step. The second jig 202 may constrain other degrees of freedom of the two tip ends 40.

In step S1702, the processing device 1400 preferably detects the edges related to the non-contact surfaces 403 of the two tip ends 40. In this case, the edges related to the two non-contact surfaces 403 separated in the X direction are detected. Therefore, it is possible to effectively increase the calculation accuracy of the reference straight line L16 described later. As described later, the reference straight line L16 is a straight line that is calculated along the contact surfaces 401 in the tip end image G40. The calculation accuracy is higher as the calculated reference straight line L16 agrees with the contact surfaces 401 in the tip end image G40 to a higher degree.

Next, the processing device 1400 calculates the reference straight line L16 based on the edges obtained in step S1702 (step S1704). Any method can be used to calculate the reference straight line L16 as long as the edges obtained in step S1702 are used. For example, when the edge related to one tip end 40 (the edge related to the non-contact surface 403) is detected at a plurality of coordinate values and the edge related to another tip end 40 (the edge related to the non-contact surface 403) is detected at a plurality of coordinate values, the processing device 1400 may calculate an approximate straight line with the smallest distance (deviation) from the plurality of coordinate values as the reference straight line L16. When the edge related to one tip end 40 (the edge related to the non-contact surface 403) is detected at one coordinate value and the edge related to another tip end 40 (the edge related to the non-contact surface 403) is detected at one coordinate value, the processing device 1400 may calculate a straight line connecting the two coordinate values as the reference straight line L16. In FIG. 16, a straight line connecting a position 1601 of the edge related to one tip end 40 and a position 1602 of the edge related to another tip end 40 is schematically indicated by a long dashed short dashed line as the reference straight line L16. By using the edges of the non-contact surfaces 403 in this manner, the reference straight line L16 along the contact surfaces 401 can be calculated accurately.

The reference straight line L16 can also be calculated only from a plurality of coordinate values of the edge related to the non-contact surface 403 of one tip end 40 (the edge related to the non-contact surface 403). Also in this case, the reference straight line L16 can be calculated accurately when the circumferential range of the non-contact surface 403 is relatively wide. When calculating the reference straight line L16 from the edges related to the non-contact surfaces 403 of the two tip ends 40, however, the reference straight line L16 can be calculated stably and accurately because the reference straight line L16 is calculated from the two edges sandwiching the contact surfaces 401 in the circumferential direction as viewed in the axial direction (corresponding to arrow W).

Next, the processing device 1400 determines the radiation position of the laser beam 110 along the reference straight line L16 (the position in the range D2 shown in FIG. 8) based on the reference straight line L16 obtained in step S 1704 (step S1706). Specifically, the processing device 1400 determines the movement trajectory of the radiation position of the laser beam 110 so that the radiation position of the laser beam 110 changes on the reference straight line L16. Both ends of the range D1 (see FIG. 7) of the welding target portion 90 (both ends in the circumferential direction) may be determined based on the position of the jig 200.

With the various processes shown in FIG. 17, the reference straight line L16 along the contact surfaces 401 of the two tip ends 40 can be accurately calculated based on the tip end image G40 showing the two tip ends 40. Thus, the movement trajectory of the radiation position of the laser beam 110 along the contact surfaces 401 can be determined accurately. As a result, the reliability of the welded portion between the two tip ends 40 can be increased effectively.

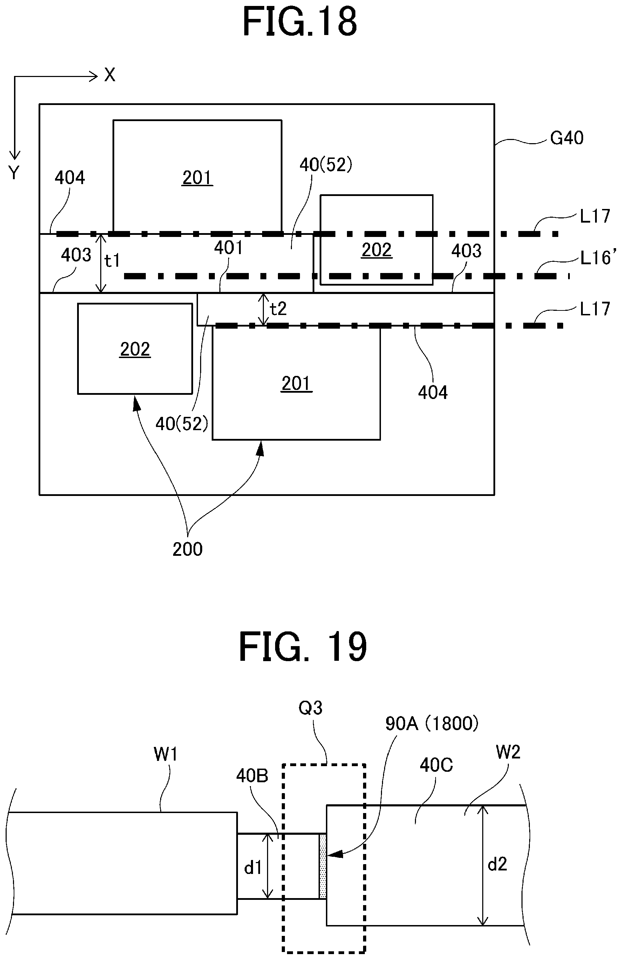

In the present embodiment, the edges related to the non-contact surfaces 403 continuous with the contact surfaces 401 are detected and the reference straight line L16 is calculated based on the detected edges as described above. As a contrasting comparative example, such a method is conceivable that edges related to non-contact surfaces 404 on the opposite side (radially opposite side) to the contact surfaces 401 are detected and a reference straight line L16' (see FIG. 18) is calculated based on the detected edges (see, for example, Patent Document 1). The edges related to the non-contact surfaces 404 can also be detected accurately because the brightness changes relatively sharply at the boundaries with the jig 200 (e.g., the first jig 201). In the case of such a comparative example, based on, for example, straight lines L 17 calculated from the edges related to the non-contact surfaces 404, a straight line parallel to and equidistant (equidistant in the radial direction) from the straight lines L17 can be calculated as the reference straight line L16'.

As described in the section "Problem to be Solved by the Invention", however, in such a comparative example, it is difficult to accurately calculate the reference straight line L16' due to individual variations in the thicknesses of the coil pieces 52 (thicknesses in the direction perpendicular to the contact surfaces 401). For example, assuming that the thicknesses of the tip ends 40 are t1, t2 as shown in FIG. 16, the reference straight line L16' can be calculated accurately when the thickness t1 and the thickness t2 are completely the same (see FIG. 16). The calculation accuracy of the reference straight line L16' decreases when there is a significant difference between the thicknesses t1, t2 as shown in FIG. 18. The significant difference between the thicknesses 11, t2 can occur when the insulating coatings 62 are removed. As a result, the calculated reference straight line L16' is displaced in the radial direction from the contact surfaces 401 with a deviation of approximately a half of the difference between the thicknesses 11, t2. It is desirable that such a deviation be eliminated in order to increase the reliability of the joint portion.

In this regard, according to the present embodiment, the edges related to the non-contact surfaces 403 continuous with the contact surfaces 401 are detected and the reference straight line L16 is calculated based on the detected edges as described above. Thus, even when there is a significant difference between the thicknesses 11, t2, the reference straight line L16 can be calculated with high accuracy without being affected by such a significant difference.

Also in the present embodiment, the edges related to the non-contact surfaces 404 may be detected. In this case, the edges related to the non-contact surfaces 404 may be used to detect the edges related to the non-contact surfaces 403. For example, the edges related to the non-contact surfaces 404 and the edges related to the non-contact surfaces 403 are substantially parallel. Therefore, this tendency may be used to increase the detection accuracy of the edges related to the non-contact surfaces 403.

Next, an example of application to another welding target portion 90A will be described with reference to FIGS. 19 to 21.

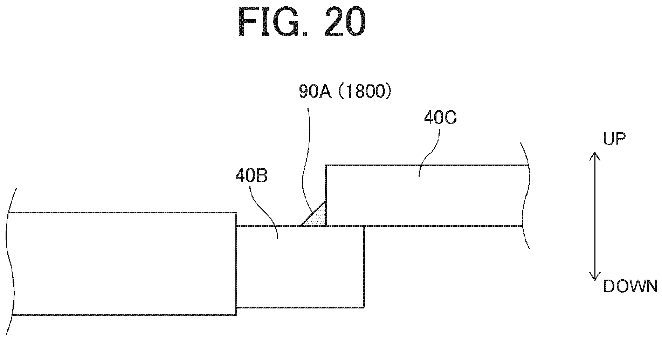

FIGS. 19 and 20 are diagrams illustrating the other welding target portion 90A. FIG. 19 is a top view and FIG. 20 is a side view. FIGS. 19 and 20 show the welding target portion 90A at a groove welding position 1800. For description, the vertical direction is defined as shown in FIG. 20 with FIG. 20 as the side view, but the vertical direction may differ from the illustrated direction in an actual mounting state.

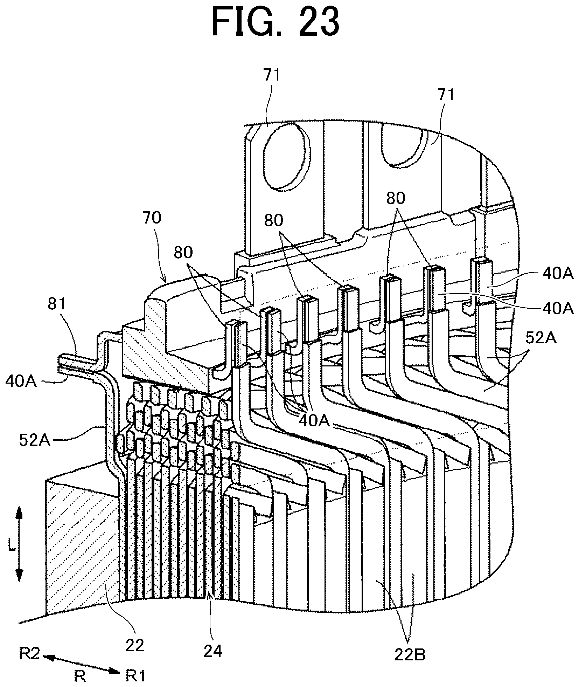

The welding target portion 90A is set between a welding target workpiece W1 and a welding target workpiece W2. The welding target workpiece W1 and the welding target workpiece W2 may be coil pieces for the stator 21, such as the coil pieces 52 described above. Alternatively, either one of the welding target workpiece W1 and the welding target workpiece W2 may be an end of a busbar described later (see ends 80, 81 in FIG. 23).

In this example, the welding target workpiece W1 and the welding target workpiece W2 are joined in such a manner that the lower surface of a tip end 40C of the welding target workpiece W2 is in contact with the upper surface of a tip end 40B of the welding target workpiece W1 in the vertical direction. A widthwise dimension d1 of the welding target workpiece W1 is significantly smaller than a widthwise dimension d2 of the welding target workpiece W2. In this case, as shown in FIG. 19, the welding target workpiece W1 and the welding target workpiece W2 may intersect each other in such a manner that both ends of the welding target workpiece W2 in the width direction are exposed from both ends of the welding target workpiece W1 in the width direction.

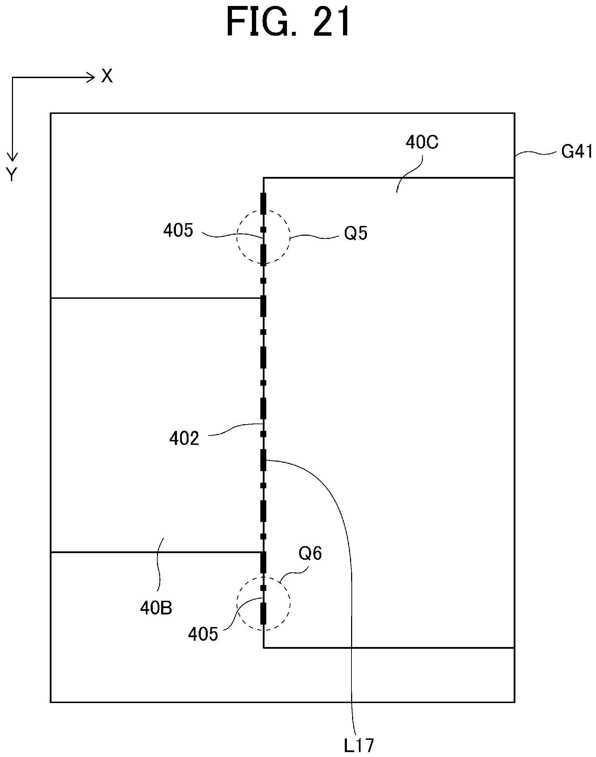

The laser radiation position determination method based on image recognition according to the present embodiment can also be applied to such a welding target portion 90A. Specifically, edges of non-contact surfaces 405 of the tip end 40C of the welding target workpiece W2 (non-contact surfaces 405 continuous with a contact surface 402) are first detected based on a tip end image G41 shown in FIG. 21 that is obtained by imaging a portion Q3 in FIG. 19. In this case, the edges of the non-contact surfaces 405 can be detected as edges based on a sharp brightness difference in the X direction, and are preferably detected on both sides of the tip end 40B of the welding target workpiece W1 as indicated by enclosures Q5, Q6 in FIG. 21. A reference straight line L17 along the contact surfaces 402 can be calculated accurately by calculating the reference straight line L17 based on coordinate values of two or more edges. As a result, the radiation position of the laser beam 110 along the contact surfaces 402 can be determined accurately.

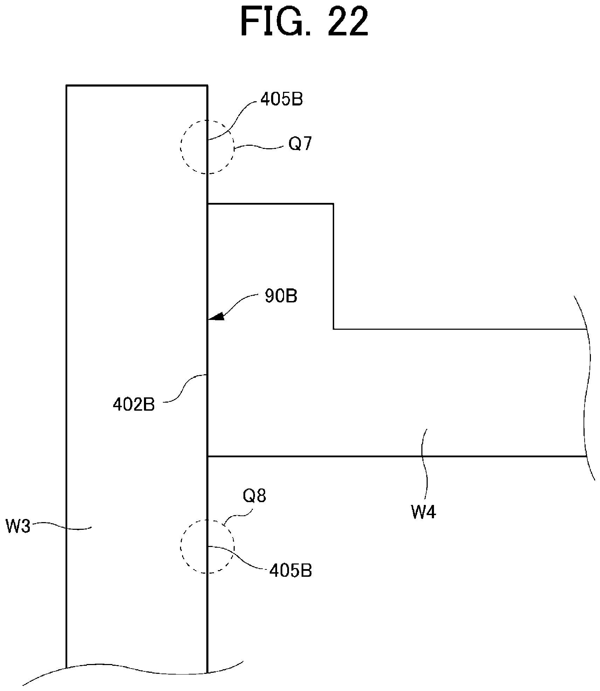

As described above, the laser radiation position determination method based on image recognition according to the present embodiment can be applied to the joining of various types of welding target workpieces. Specifically, the laser radiation position determination method can be applied to the case where the non-contact surfaces continuous with the contact surface where the welding target portion is set are present. For example, in a welding target portion 90B shown in FIG. 22, a welding target workpiece W3 and a welding target workpiece W4 are joined in such a manner that the L-shaped tip end of the welding target workpiece W4 is in contact with the welding target workpiece W3. Also in this case, non-contact surfaces 405B continuous with a contact surface 402B are formed (see enclosures Q7, Q8). Therefore, it is similarly possible to accurately determine the radiation position of the laser beam 110 along the contact surface 402B by detecting edges of the non-contact surfaces 405B.

Although the embodiments are described in detail above, the present disclosure is not limited to the specific embodiments, and various modifications and changes can be made within the scope of the claims. It is also possible to combine all or part of the constituent elements of the embodiments described above. Of the effects of each embodiment, those related to dependent claims are additional effects distinct from generic concepts (independent claim).

For example, in the above embodiment, the welding target portion 90 is formed such that the coil pieces 52 having the tip ends 40 whose axial outer end faces 42 are processed into the convex arcuate surfaces as shown in FIG. 6 are brought into contact with each other in the radial direction as shown in FIG. 7. However, the present disclosure is not limited to this. For example, the welding target portion 90 may be formed such that coil pieces having tip ends 40 that are not processed as described above (that is, a configuration in which the axial outer end faces 42 extend linearly and are connected to the tip end faces as viewed in the radial direction) are brought into contact with each other in the radial direction. In this case, the coil pieces may be brought into contact with each other in the radial direction in such a manner that the tip ends 40 (unprocessed tip ends 40) intersect each other in an X-shape as viewed in the radial direction or have a C-shape or an L-shape as viewed in the radial direction.

Although the above embodiment relates to the joining of the tip ends 40 of the coil pieces 52, the above embodiment can also be applied to joining of the tip end 40 of the coil piece 52 and the end of a busbar. In this case, the tip end 40 of the coil piece 52 to be joined to the end of the busbar may be the tip end of a crossover portion forming a power line or a neutral point.

For example, in FIG. 23, the ends 80, 81 of the busbar held by a terminal block 70 and tip ends 40A of coil pieces 52A are joined to each other. In this case, a part of the busbar held by the terminal block 70 is electrically connected to three-phase external terminals 71 inside the terminal block 70. The laser radiation position determination method based on image recognition according to the present embodiment may be applied to the joint portions between the ends 80, 81 of the busbar and the tip ends 40A of the coil pieces 52A when the non-contact surfaces continuous with the contact surface where the welding target portion is set are present. In this case, the welding target portions may be set at the edges of the contact surfaces appearing on the tip end faces of the ends 80, 81 of the busbar and the tip ends 40A of the coil pieces 52A. In FIG. 23, an L direction corresponds to the axial direction, an R direction corresponds to the radial direction, an R1 side corresponds to the radially inner side, and an R2 side corresponds to the radially outer side. In FIG. 23, the ends 80, 81 of the busbar and the tip ends 40A of the coil pieces 52A are in contact with each other so as to completely overlap each other as viewed in the radial or axial direction, but may be in contact with each other in a specific direction (e.g., the circumferential direction) so as to intersect each other in an X-shape or have a C-shape or an L-shape as viewed in the specific direction. In this case, the welding target portions may be set linearly along the axial outer edges of the contact surfaces.

### Description of the Reference Numerals

1 ... motor (rotary electric machine), 24 ... stator coil, 52 ... coil piece, 40 ... tip end (end), 22 ... stator core, 80, 81 ... end of busbar, 110 ... laser beam, 401, 402 ... contact surface, 403, 405 ... non-contact surface, G40, G41 ... tip end image (image), 1402... camera, 200 ... jig, Δ1 ... clearance

## Claims

1. A method for manufacturing a stator for a rotary electric machine, the method comprising:
an installation step of installing coil pieces for a stator coil in a stator core; and
a joining step of joining ends of the coil pieces or the end of the coil piece and an end of a busbar by laser welding after the installation step, wherein
the joining step includes
a setting step of bringing two ends to be joined into contact with each other,
an image recognition step of detecting, after the setting step, image features related to non-contact surfaces continuous with contact surfaces of the two ends in an image obtained by imaging the two ends, and
a determination step of determining, after the image recognition step, a laser radiation position based on the image features related to the non-contact surfaces subjected to image recognition.

2. The method for manufacturing the stator for the rotary electric machine according to claim 1, wherein the image recognition step includes detecting the image features related to the non-contact surfaces at the two ends.

3. The method for manufacturing the stator for the rotary electric machine according to claim 2, wherein the determination step includes linearly changing the laser radiation position based on a straight line passing through pixel positions related to the image features in the image or portions near the pixel positions.

4. The method for manufacturing the stator for the rotary electric machine according to any one of claims 1 to 3, wherein
the image is captured by a camera positioned so that an optical axis extends along the non-contact surfaces, and
the image features include edges having brightness differences in a direction intersecting the non-contact surfaces in the image.

5. The method for manufacturing the stator for the rotary electric machine according to any one of claims 1 to 4, wherein
the setting step includes positioning the two ends with a jig, and
the non-contact surfaces face the jig with clearances in a direction perpendicular to the non-contact surfaces.
